# EUROPEAN PATENT APPLICATION

(11) **EP 0 648 602 A1**
(43) Date of publication of application: **19.04.1995**
(21) Application number: 94307488.0
(22) Date of filing: 12.10.1994
(51) Int. Cl.: B32B 27/12

(54) **Composite fiber material member utilizing reclaimed plastics material**

(30) Priority: 15.10.1993 US 136672
(71) Applicant: HOOVER UNIVERSAL INC., Plymouth, Michigan 48170 (US)
(72) Inventor: Doerer, Richard P., Grosse Pointe, Michigan 48230 (US)
(74) Representative: Price, Nigel John King

(57) **Abstract**

An improved composite fiber material comprising micro-filaments is provided. The material may be produced by a melt blown or spunbonded process and is used to form a micro-filament mat (12) which may be used to form a three-dimensional article such as an automotive headliner. The material is stiff enough to form three-dimensional articles without reinforcing structures and has improved acoustical properties. The micro-filament material of the present invention as well as the resulting three-dimensional article may comprise reclaimable plastics material.

## Description

The present invention relates generally to a composite filament material and, more particularly, to a melt blown or spunbonded micro-filament mat and methods of using and producing the same.

Since the late 1970's, one of the main constructions of automotive headliners has been fiberglass consisting of glasswool and having from about 10% to about 24% urea or a phenolic-formaldehyde resin (on a weight basis to the glass). The fiberglass headliners are usually compression molded at about 400°F to about 500°F. Although these headliners have satisfactory acoustical qualities, manufacturing difficulties such as brittleness of the material and irritation of workers' skin caused by the fiberglass material, has led to the phasing out of fiberglass automotive headliners.

In the mid- to late- 1980's, thermoformable and thermocrushable foams began replacing fiberglass in automotive headliners. These foams are generally polyurethane foams. Although polyurethane foams have satisfactory acoustical qualities for automotive headliners, their acoustical properties are not equal to fiberglass on a cost basis. Furthermore, polyurethane foam systems have a relatively long cure time, *i.e.* approximately 24 to about 48 hours.

A further draw-back in using polyurethane foams in the manufacture of automotive headliners is the waste incurred when the foam is sliced; in some systems only about 65% of the original polyurethane poured is usable and the remainder is scrapped. Also, layers of sheets of the polyurethane foam must be used to establish the proper thickness and stiffness and reinforcing structures may also be required to form three-dimensional articles.

It would thus be desirable to provide an improved material for producing three-dimensional articles that does not require reinforcing structures to form the article. It would also be desirable to provide a material for producing three-dimensional articles, which has a variable thickness. It would further be desirable to provide a material with improved sound absorptive and/or sound deadening properties, *i.e.* improved acoustical properties. It would also be desirable to provide a material with improved acoustical properties which may be used to produce three-dimensional articles. It would further be desirable to provide a material with improved acoustical properties which may be used to produce automotive headliners. It would also be desirable to provide a material for producing automotive headliners which is relatively inexpensive. It would further be desirable to provide a material for producing automotive headliners which is reclaimable.

A melt blown or spunbonded micro-filament material and methods of producing such a material is provided. The material of the present invention may be used to form a mat which may be used to form a three-dimensional article such as an automotive headliner. The mat can have a thickness of about 3 inches and when molded may be stiff enough so that reinforcing structures are not required to produce a three-dimensional article. The micro-filament material may be comprised of reclaimable plastics material such as polyethylene terephthalate, polypropolene and alloys thereof.

A method of producing the material of the present invention utilizes melt blown or spunbonded technology. By utilizing a melt blown or spunbonded process, the micro-filament material comprises numerous tiny air spaces which enhance the acoustical absorbency of the material. The resulting three-dimensional article thus has excellent sound absorptive and/or sound deadening properties.

Thermoset or thermoplastic resin impregnation of the material of the present invention and/or the binding of a reinforcing structure to the material are also contemplated by the present invention and may provide additional structural support. Moreover, the micro-filament material, thermoset resin, thermoplastic resin, reinforcing structures, and any other "add-ons" such as scrims and cover material, may be made from reclaimable material, thereby allowing for the manufacture of a reclaimable three-dimensional article.

Embodiments of mat in accordance with the present invention will now be described, by way of example only, with reference to the accompanying drawings, in which:
Figure 1 schematically illustrates a cross-sectional view of a substrate of the present invention and a cover for the substrate; and
Figure 2 schematically illustrates a cross-sectional view of a multi-layered mat forming a part of the substrate in Fig. 1.

An improved composite fiber material comprising micro-filaments is provided by the present invention. The material is produced by a melt blown or spunbonded process. The micro-filaments of the material are from about 1 to about 100 microns in diameter. The material thus comprises numerous tiny air spaces which enhance the acoustical absorbency of the material.

The material of the present invention may be used to form a mat which may be used to form a three-dimensional article. The mat can have a thickness of from about 12mm (0.5 inch) to about 76mm (3 inch). The mat may be molded and become stiff enough so that reinforcing structures are not required to form three-dimensional articles. However, for additional support, the material of the present invention may be impregnated with athermoset or thermoplastic resin and/or be bonded to reinforcing structures.

The micro-filament material of the present invention comprises a multitude of substantially randomly oriented fibers having a diameter of from about 1 to about 100 microns. The material is formed by a melt blown or spunbonded process which make webs from molten plastics material, and a melt blown process is preferred. When using the meltblown process, the preferred diameter of the filaments is from about 1 to about 30 microns. When a spunbonded process is employed, the preferred diameter of the filaments is from abut 40 to about 80 microns.

As known to those skilled in the art, the melt blown process extrudes a thermoplastic, fiber forming polymer through a linear die containing from about 20 to about 40 small orifices per inch (or 2.54cm) of die width having a diameter of from about 25 x 10⁻² mm (1.0 x 10⁻² inch) to about 76.2 x 10⁻² mm (3.0 x 10⁻² inch). Convergent streams of hot air rapidly attenuate the extruded polymer streams to form filaments. The attenuated filaments are then blown by high velocity air onto a collector screen, thus forming a melt blown web. In a preferred embodiment of the present invention, a high caloric transfer medium (HCTM) process is applied to the melt blown web. The HCTM process is well known to those skilled in the art and utilizes superheated steam to thermally bond the filaments of the web. The HCTM process is described in detail in U.S. Patent No. 5,108,691, herein incorporated by reference. The larger the filament diameter, the easier the superheated steam passes through the web. A vacuum may also be employed to facilitate passage of the steam through the web. After the injection of the super heated steam, ambient or cool air may also be passed through the web to set the thermoplastic material. Other thermal bonding processes such as the application of dry hot air are also contemplated by the present invention.

Those skilled in the art will also appreciate that in a spunbonded process a thermoplastic, fiber forming polymer is extruded through a linear or circular spinnerette. The extruded polymer streams are rapidly cooled and attenuated by air and/or mechanical drafting rollers to form desired diameter filaments. The filaments are then laid down onto a conveyor belt to form a web having a loft of about 13mm (5 inch). The web is then thermally bonded by a HCTM process to form a spunbonded web.

It will also be appreciated that a flashspinning process may also be employed to produce the micro-filaments of the present invention. In the flashspinning process, high density polyethylene is dissolved, extruded and rapidly solvent evaporated causing individual filaments to assume a highly fibrillar form before they are deposited on a screen. The web may then be thermally bonded by a HCTM process or hot dry air. Again, the larger the filament diameter, the easier the superheated steam or hot dry air passes through the web. Also, a vacuum may be employed to further facilitate passage of the steam or air through the web.

Although any suitable thermoplastic, fiber forming polymer may be employed to form the material of the present invention, polypropolene (PP), polyethylene terephthalate (PET), acrylonitrile butadiene styrene (ABS), polyacrylnitrile (PAN), polyvinyl chlorine (PVC), and alloys thereof, are preferred. In a highly preferred embodiment, PP, PET and/or alloys thereof may be used. Polypropolene has a comparatively low relative density, 0.9 to 0.95, a melt temperature of approximately 115°C (240°F) and is available as an inexpensive raw material from virgin resin or reclaimed material (*e.g.* syrup bottles). PET has a higher relative density, 1.34 to 1.39, a melt temperature of approximately 260°C (500°F) and is also available as an inexpensive raw material from virgin resin or reclaimed material (*e.g.* soda bottles). Furthermore, although PP and PET do not homogenize well in the solid state, PP and PET may be alloyed in the liquid molten state. Additives to improve alloying may also be employed. It will be appreciated to those skilled in the art that the material used may be varied according to the desired result.

The micro-filaments forming the material of the present invention are randomly oriented and have a diameter of from about 1 to about 100 microns, preferably from about 1 to about 30 microns when the meltblown process is employed and from about 40 to about 80 microns when the spunbonded process is employed. The mats of the present invention may be from about 400 gm/m² to about 800 gm/m² and have a loft of about 13mm (.5 inch) to about 76mm (3 inch).

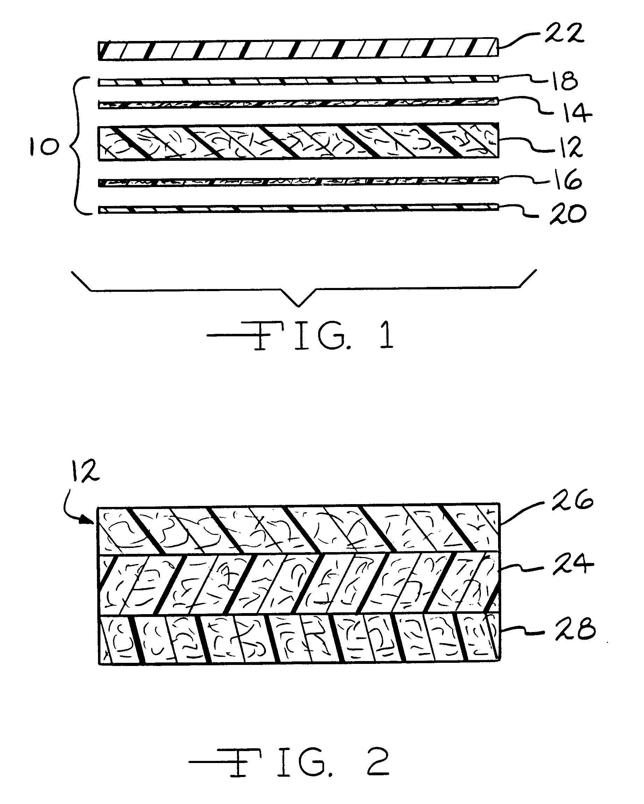

As shown in Figure 1, in a preferred embodiment, a substrate 10 includes a micro-filament mat 12 having two outer surfaces, each of which is bonded to reinforcing structures 14 and 16, respectfully. Bonding is achieved by impregnation with wet or dry thermoset or thermoplastic resin which is subsequently cured when the substrate is heated in a mold. Scrim 18 and backing scrim 20 are adhered to reinforcing structures 14 and 16, respectfully. Adherence is achieved by using an adhesive such as an adhesive film, liquid or powder, and curing the adhesive within the heated mold. Preferably, scrim 18 is covered by a cover material 22 either before or after molding of the substrate. In a preferred embodiment, the substrate 10 maintains a loft of at least about 37mm, thereby providing a variable thickness of from about 3mm to about 25mm.

Micro-filament mat 12 comprises the material of the present invention, described in detail above. It is desirable that the mat thickness be twice the thickness of the resulting molded composite structure so as to achieve a desired final structure. In an altemative embodiment, the mats of the present invention may be multi-layered, utilizing the same or different materials with the same or different filament diameters. As shown in Figure 2, mat 12 may have an inner layer 24 providing enhanced rigidity and exterior layers 26 and 28 providing enhanced acoustical properties. For example, inner layer 24 may comprise filaments having a diameter of from about 40 to about 80 microns formed from a spunbonded process and outer layers 26 and 28 may comprise filaments having a diameter from about 1 to about 30 microns formed from a meltblown process. The multi-layered mat may also comprise layers of plastics material such as PET having a fiber diameter of greater than 100 microns between layers of melt blown or spunbonded plastics material. It will be appreciated to those skilled in the art that the final filament diameter of the mat may be varied according to the desired result.

The mats of the present invention may also be impregnated with a thermoset or thermoplastic resin to enhance the stiffness of the mat as well as to enhance the temperature stability of the mat. The impregnated mat is molded under heat and pressure to activate the thermoset resin, preferably by a HCTM process. Suitable resins include PET, PP, phenolic and acrylic resin. The resins may be in liquid or powder form. Examples of dry single stage phenolic resin systems suitable for the present invention include PLENCO 10374 and PLENCO 10653, both available from Plastics Engineering Company. In a preferred embodiment, a reclaimable plastics resin such as PP or PET is employed so that a reclaimable impregnated mat may be provided.

The mats of the present invention may also be bound to reinforcing structures 14 and 16. Reinforcing structures 14 and 16 are relatively thin structures comprising a plurality of random length, randomly dispersed fibers. The reinforcing structures 14 and 16 may be made of individual fibers, chopped stranded fibers, a polyester mat or fiberglass mat. In a preferred embodiment, the reinforcing structures are produced from reclaimable plastics material such as PET.

The scrim 18 and backing scrim 20 are comprised of spunbonded or melt blown polyester as well as rayons. The scrims may be used decoratively, to cover the reinforcing structure. In a preferred embodiment, the scrim 18 and backing scrim 20 may also be produced from reclaimable plastics material such as PET.

The cover material 22 is preferably post-bonded to the substrate 10 by a dry (*e.g.* film or powder) or wet adhesive. If a non-woven material is used, it may be ultrasonically bonded to the substrate 10. An example of a suitable cover material includes knitted nylon tricot with a backing of a thin layer of polyurethane foam. In a preferred embodiment, the cover material comprises a reclaimable material *e.g.* PET, such as the non-woven carpet type material presently available from Foss Manufacturing Co., Inc.

In an alternative embodiment of the present invention, clips or other attachment devices may also be included in the three-dimensional articles of the present invention. Such devices may be made of thermoset materials such as bulk molding compound (BMC) so that a single step molding process may be utilized in the manufacture of the three-dimensional article. Injection molding of the clips or other attachment devices is also provided by the present invention. Again, reclaimable material such as PET is preferred.

The material of the present invention (including mat 12 and substrate 10) may be used to produce any three-dimensional molded structure. It will be appreciated by those skilled in the art that the desired final form of the structure may be obtained through die-shaping, stamping, rolling, calendaring, molding and like operations. Furthermore, the material of the present invention is especially appropriate for producing articles which require sound absorptive and/or sound deadening properties. Examples of such articles include office partitions, aircraft interior wall coverings, automotive doors and automotive headliners.

It will also be appreciated that by utilizing reclaimable materials in the various components of the molded structure of the present invention, the molded structures themselves may be reclaimable. More specifically, the micro-filament material, thermoset resin, thermoplastic resin, reinforcing structures, scrims and cover material may all be made from reclaimable material such as PET and PP.

Those skilled in the art can now appreciate from the foregoing description that the broad teachings of the present invention can be implemented in a variety of forms. Therefore, while this invention has been described in connection with particular examples thereof, the true scope of the invention should not be so limited since other modifications will become apparent to the skilled practitioner upon a study of the drawings, specification and following claims.

## Claims

1. A micro-filament mat comprising plastics material filaments having a diameter of from about 1 to 100 microns.

2. The mat of claim 1, wherein the mat has a thickness of from about 12mm to about 76mm.

3. The mat of claim 1 or claim 2, wherein the filaments have a diameter of from about 1 to about 30 microns.

4. The mat of claim 1 or claim 2, wherein the filaments have a diameter of from about 40 to about 80 microns.

5. The mat of claim 1 or claim 2, wherein one layer of the mat comprises filaments having a diameter of from about 1 to about 30 microns and another layer of the mat comprises filaments having a diameter from about 40 to about 80 microns.

6. The mat of any one of the preceding claims, wherein the filaments further comprise reclaimable plastics material.

7. The mat of claim 6, wherein the reclaimable plastics material is chosen from the group consisting of polyethylene terephthalate, polypropolene and alloys thereof.

8. The mat of claim 7, wherein the reclaimable plastics material is polyethylene terephthalate, polypropolene or an alloy of polyethylene terephthalate and polypropolene.

9. A moldable structure comprising a micro-filament mat as claimed in any one of the preceding claims.

10. The moldable structure of claim 9, wherein the micro-filament mat is impregnated with resin.

11. The moldable structure of claim 9 or claim 10, further comprising a reinforcing structure bonded to an outer surface of the mat.

12. The moldable structure of claim 10 or claim 11, wherein the reinforcing structure and/or resin comprises reclaimable plastics material.

13. The moldable structure of any one of claims 9 to 12, further having a scrim bonded to the mat.

14. The moldable structure of any one of claims 9 to 13, further having a fabric cover.

15. The moldable structure of claim 13 or claim 14 wherein the fabric cover and/or scrim comprises reclaimable material.

16. The moldable structure of any one of claims 9 to 15, wherein the microfilament mat is produced by a melt blown process.

17. The moldable structure of any one of claims 9 to 15, wherein the microfilament mat is produced by a spunbonded process.

18. A moldable structure comprising a mat as claimed in any one of claims 1 to 8, further comprising:
(a) a reinforcing structure bonded to the mat;
(b) a scrim bonded to the reinforcing structure; and
(c) a cover material bonded to the scrim.

19. The moldable structure of claim 18 wherein the structure is reclaimable.

20. A moldable structure as claimed in any one of claims 9 to 19, wherein the moldable structure is an automotive headliner.

21. A process for forming a composite fiber material comprising:
(a) providing a micro-filament web produced by a melt blown process; and
(b) applying superheated steam to the web to thermoform the web.

22. The process of claim 21, wherein the micro-filaments of the web have a diameter of from about 1 to about 30 microns.

23. A process for forming a composite fiber material comprising:
(a) providing a micro-filament web produced by a spunbonded process; and
(b) applying superheated steam to the web to thermoform the web.

24. The process of claim 23, wherein the micro-filaments of the web have a diameter of from about 40 to about 80 microns.

25. A method of forming a three-dimensional moldable structure comprising:
(a) melt blowing a plastics material, thereby producing a micro-filament web; and
(b) thermoforming the web with a high caloric transfer medium process.

26. A method of forming a three-dimensional moldable structure comprising:
(a) spinbonding a plastics material, thereby producing a micro-filament web; and
(b) thermoforming the web with a high caloric transfer medium process.

27. The method of claim 25 or claim 26, wherein the plastics material is reclaimable.

28. The process of any one of claims 21 to 26, wherein the micro-filament web comprises reclaimable plastics material chosen from the group consisting of polyethylene terephthalate, polypropolene and alloys thereof.
